(19) Europäisches Patentamt
European Patent Office
Office européen des brevets

(11) **EP 4 773 279 A1**

(12) **EUROPEAN PATENT APPLICATION**
published in accordance with Art. 153(4) EPC

(43) Date of publication:
**08.07.2026 Bulletin 2026/28**

(21) Application number: **24861735.9**

(22) Date of filing: **01.08.2024**

(51) International Patent Classification (IPC):
*H01M 10/0525* (2010.01)    *H01M 4/70* (2006.01)
*H01M 50/531* (2021.01)    *H01M 50/186* (2021.01)

(52) Cooperative Patent Classification (CPC):
Y02E 60/10

(86) International application number:
**PCT/CN2024/109246**

(87) International publication number:
**WO 2025/050890 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023 CN 202311150807**

(71) Applicant: **Ningde Amperex Technology Limited
Ningde, Fujian 352100 (CN)**

(72) Inventors:
• **WANG, Jinli
Ningde, Fujian 352100 (CN)**
• **WANG, Chen
Ningde, Fujian 352100 (CN)**
• **YAN, Dongyang
Ningde, Fujian 352100 (CN)**

(74) Representative: **Icosa
83 avenue Denfert-Rochereau
75014 Paris (FR)**

(54) **SECONDARY BATTERY AND ELECTRONIC APPARATUS**

(57)    A secondary battery and an electronic apparatus are provided. A positive electr ode sheet in the secondary battery includes a positive electrode current collector, a pos itive electrode active material layer, and a positive electrode tab, where the positive el ectrode active material layer is disposed on at least one surface of the positive electrod e current collector. The positive electrode active material layer is provided with a first groove exposing the positive electrode current collector. The positive electrode tab is disposed in the first groove and connected to the positive electrode current collector. An insulating tape is provided on each of a surface of the positive electrode tab and a r egion, corresponding to the first groove, of a surface of the positive electrode sheet aw ay from the positive electrode tab. A melting point of the insulating tape is 250°C to 4 50°C. An electrolyte includes carbonate and carboxylate. Based on a mass of the elect rolyte, a mass percentage of the carbonate is denoted as A and a mass percentage of th e carboxylate is denoted as B, where A and B satisfy: $75\% \leq A + B \leq 88\%$ and $1 < A / B$. Through the above configuration, the secondary battery has good reliability.

FIG. 1

## Description

This application claims priority to Chinese Patent Application No. 2023111 50807.9, filed with the China National Intellectual Property Administration on Septem ber 7, 2023 and entitled "SECONDARY BATTERY AND ELECTRONIC APPARAT US", which is incorporated herein by reference in its entirety.

## TECHNICAL FIELD

This application relates to the field of electrochemical technology, and in p articular, to a secondary battery and an electronic apparatus.

## BACKGROUND

A secondary battery typically includes a positive electrode sheet, a negativ e electrode sheet, a separator, an electrolyte, and a packaging bag. Due to the advantag es such as high energy density, high power density, light weight, small volume, and lo ng cycle life, the secondary battery has been widely used in consumer electronics (3C) products. However, under extreme environmental conditions, the secondary battery m ay pose risks of fire and explosion, threatening the personal safety of consumers. Ther efore, ensuring the reliability of the secondary battery is particularly important. Amon g the reliability tests, the high-temperature short-circuit test is a critical item. When an external short circuit occurs, excessive heat generation may cause a rapid increase in t he temperature of the secondary battery, leading to local short circuits and causing saf ety issues. Therefore, how the high-temperature short-circuit pass rate of the secondar y battery is increased to improve the reliability of the secondary battery has become a n urgent technical problem for those skilled in the art to address.

## SUMMARY

This application is intended to provide a secondary battery and an electroni c apparatus to improve the reliability of the secondary battery.

It should be noted that in the summary of this application, a lithium-ion bat tery is used as an example of a secondary battery to explain this application, but the se condary battery of this application is not limited to the lithium-ion battery. The specifi c technical solutions are described below.

A first aspect of this application provides a secondary battery. The seconda ry battery includes an electrode assembly and an electrolyte, where the electrode asse mbly includes a positive electrode sheet, a negative electrode sheet, and a separator di sposed between the positive electrode sheet and the negative electrode sheet; the posit ive electrode sheet includes a positive electrode current collector, a positive electrode active material layer, and a positive electrode tab; the positive electrode active materia l layer is disposed on at least one surface of the positive electrode current collector; th e positive electrode active material layer is provided with a first groove exposing the p ositive electrode current collector; the positive electrode tab is disposed in the first gro ove and connected to the positive electrode current collector; an insulating tape is pro vided on each of a surface of the positive electrode tab and a region, corresponding to the first groove, of a surface of the positive electrode sheet away from the positive ele ctrode tab; a melting point of the insulating tape is 250°C to 450°C; the electrolyte inc ludes carbonate and carboxylate; and based on a mass of the electrolyte, a mass perce ntage of the carbonate is denoted as A and a mass percentage of the carboxylate is den oted as B, where A and B satisfy: $75\% \le A + B \le 88\%$ and $1 < A / B$. In this applicatio n, the insulating tape within the melting point range of this application is provided on each of the surface of the positive electrode tab and the region, corresponding to the fi rst groove, of the surface of the positive electrode current collector away from the posi tive electrode tab, and the total content of carbonate and carboxylate in the electrolyte and the content ratio A / B of carbonate and carboxylate are controlled within the abov e range, so that during a high-temperature short-circuit test, when an internal temperat ure of the secondary battery rises rapidly and a large amount of heat is generated in th e secondary battery, the insulating tape exhibits good high-temperature stability and lo w thermal shrinkage rate and can maintain its integrity as applied, providing effective protection to the positive electrode tab, and reducing the probability of the positive ele ctrode tab coming into contact with the negative electrode sheet after exposed and cau sing a short circuit. The electrolyte exhibits good stability at high temperatures, few si de reactions, and a small gas production amount, reducing the risk of deformation of t he secondary battery and allowing the positive and negative electrode sheets to mainta in their original relative positions, thereby reducing the risk of an internal short circuit caused by contact between the positive and negative electrode sheets. Thus, the insula ting tape and the electrolyte work synergistically to increase a high-temperature short-circuit pass rate of the secondary battery, thereby improving the reliability of the seco ndary battery.

In an embodiment of this application, the melting point of the insulating ta pe is 250°C to 400°C. Controlling the melting point of the insulating tape within the a bove range can reduce the production cost of the secondary battery while increasing th e high-temperature short-circuit pass rate of the secondary battery.

In an embodiment of this application, the negative electrode sheet includes a negative electrode current collector, a negative electrode active material layer, and a negative electrode tab, where the negative electrode active material layer is disposed on at least one surface of the negative electrode current collector; the negative electro de active material layer is provided with a second groove exposing the negative electr ode current collector; the negative electrode tab is disposed in the second groove and connected to the negative electrode current collector; a tab protection tape is provided on a region, corresponding to the second groove, of a surface of the negative electrode sheet away from the negative electrode tab; and the insulating tape is provided on eac h of a region of a surface of the positive electrode sheet opposite the second groove an d a region of the surface of the positive electrode sheet opposite the tab protection tap e. The insulating tape is provided on each of the region of the surface of the positive el ectrode sheet opposite the second groove and the region of the surface of the positive electrode sheet opposite the tab protection tape, so that the risk of an internal short cir cuit in the secondary battery at high temperatures can be further reduced.

In an embodiment of this application, the insulating tape includes a substra te and an adhesive layer disposed on one surface of the substrate, where the substrate i ncludes at least one of polyethylene terephthalate, polyethylene, polytetrafluoroethyle ne, polyvinyl chloride, polyimide, or polypropylene. The substrates of the above types have high melting points and good thermal stability, and selecting such substrates is c onducive to increasing the high-temperature short-circuit pass rate of the secondary ba ttery.

In an embodiment of this application, along a length direction of the positi ve electrode sheet, a length of the insulating tape provided on the surface of the positi ve electrode tab is 3 to 4 times a width of the positive electrode tab; and along a width direction of the positive electrode sheet, a width of the insulating tape provided on th e surface of the positive electrode tab is 0.25 to 0.4 times a width of the positive electr ode sheet. Controlling the length and width of the insulating tape covering the positive electrode tab within the above ranges is conducive to improving a coverage effect of t he insulating tape on the positive electrode tab, thereby increasing the high-temperatur e short-circuit pass rate of the secondary battery.

In an embodiment of this application, along a length direction and width di rection of the insulating tape, thermal shrinkage rates of the insulating tape at a temper ature of 300°C are both less than or equal to 1%. This indicates that the insulating tape has good high-temperature stability at the temperature of 300°C.

In an embodiment of this application, the carbonate includes at least one of ethylene carbonate, propylene carbonate, butylene carbonate, dimethyl carbonate, eth yl methyl carbonate, diethyl carbonate, dipropyl carbonate, methyl propyl carbonate, e thyl propyl carbonate, dioctyl carbonate, dipentyl carbonate, ethyl isobutyl carbonate, isopropyl methyl carbonate, di-n-butyl carbonate, diisopropyl carbonate, or propyl car bonate; and the carboxylate includes at least one of ethyl acetate, propyl propionate, b utyl acetate, ethyl propionate, propyl acetate, or butyl propionate.

In an embodiment of this application, the carbonate includes at least one of ethylene carbonate, propylene carbonate, or diethyl carbonate; the carboxylate includ es at least one of propyl acetate or propyl propionate; and $75\% \leq A + B \leq 88\%$ and $2\% \leq A - B \leq 5\%$. Selecting the above types of carbonates and carboxylates and controlli ng the total mass $A + B$ of the carbonate and the carboxylate in the electrolyte and the content difference $A - B$ within the above ranges can further reduce the probability of explosion due to a large gas production amount inside the secondary battery, thereby f urther improving the reliability of the secondary battery.

In an embodiment of this application, the secondary battery includes a pac kaging bag; the electrode assembly and the electrolyte are accommodated in the packa ging bag; the positive electrode tab and the negative electrode tab extend from the pac kaging bag; the positive electrode tab and the negative electrode tab are each provided with a sealing adhesive, where the sealing adhesive is sealingly connected to the pack aging bag; and a melting point of the sealing adhesive is 130°C to 150°C. Controlling the melting point of the sealing adhesive within the above range is conducive to furthe r improving the reliability of the secondary battery.

In an embodiment of this application, the sealing adhesive includes at least one of polypropylene, polyethylene, polyethylene terephthalate, or polyethylene naph thalate.

A second aspect of this application provides an electronic apparatus includi ng the secondary battery according to any one of the foregoing embodiments. Therefo re, the electronic apparatus has good reliability.

The beneficial effects of this application are described below.

This application provides a secondary battery and an electronic apparatus. The secondary battery is provided with an insulating tape within a melting point range of this application on each of a surface of a positive electrode tab and a region, corres ponding to a first groove, of a surface of a positive electrode sheet away from the posi tive electrode tab, and a total content of carbonate and carboxylate in the electrolyte a nd a content ratio A / B of carbonate and carboxylate are controlled within the above r ange, so that during a high-temperature short-circuit test, when an internal temperatur e of the secondary battery rises rapidly and a large amount of heat is generated in the s econdary battery, the insulating tape exhibits good high-temperature stability and low thermal shrinkage rate and can maintain its integrity as applied, providing effective pr otection to the positive electrode tab, and reducing the probability of the positive elect rode tab coming into contact with the negative electrode sheet after exposed and causi ng a short circuit. The electrolyte exhibits good stability at high temperatures, few side reactions, and small gas production amount, reducing the risk of deformation of the secondary battery and allowing electrode sheets to maintain their original relative positions, thereby reducing the risk of an internal short circuit caused by contact between positive and negative electrode sheets. Thus, the insulating tape and the electrolyte work synergistically to increase a high-temperature short-circuit pass rate of the secondary battery, thereby improving the reliability of the secondary battery.

Certainly, any product or method implementing this application does not necessarily need to achieve all the advantages described above simultaneously.

## BRIEF DESCRIPTION OF THE DRAWINGS

To more clearly illustrate the technical solutions in some embodiments of this application or in the prior art, the drawings required for describing these embodiments or the prior art are briefly described below. Apparently, the drawings described below are only some embodiments of this application, and those of ordinary skill in the art can obtain other embodiments based on these drawings.

FIG. 1 is a schematic diagram of an adhesion position of an insulating tape according to an embodiment of this application;
FIG. 2 is a schematic diagram of an adhesion position of an insulating tape on a surface of a positive electrode tab according to an embodiment of this application;
FIG. 3 is a schematic diagram of an adhesion position of the insulating tape in FIG. 2 in a region, corresponding to a first groove, of a surface of a positive electrode current collector away from the positive electrode tab; and
FIG. 4 is a schematic diagram of an adhesion position of an insulating tape according to another embodiment of this application.

## DETAILED DESCRIPTION

The technical solutions in some embodiments of this application will be clearly and completely described below in conjunction with the drawings in these embodiments of this application. Apparently, the described embodiments are only some rather than all of these embodiments of this application. All other embodiments obtained by those skilled in the art based on this application fall within the protection scope of this application.

It should be noted that in the specific embodiments of this application, a lithium-ion battery is used as an example of a secondary battery to explain this application, but the secondary battery of this application is not limited to the lithium-ion battery.

When a secondary battery generates an excessively high amount of heat during abuse and is at a high temperature (which is a temperature greater than or equal to 150°C), a separator is prone to shrinking, easily causing contact between a positive electrode sheet and a negative electrode sheet, and thus resulting in an internal short circuit. A temperature at a positive electrode tab, especially an aluminum tab, is often the highest, causing a tab protection tape and an exposed sealing adhesive to melt, thus leading to contact between the positive electrode tab at a welding point and a large area of the negative electrode sheet, and expanding an area of an internal short circuit in the secondary battery. Meanwhile, side reactions of an electrolyte at high temperatures are intensified, generating a large amount of gas. The movement of gas inside the secondary battery may cause separation of the positive electrode sheet, the separator, and the negative electrode sheet, making lithium ions unable to intercalate and deintercalate normally during charging and discharging of the secondary battery, resulting in capacity loss, or causing a short circuit between the positive and negative electrode sheets, thus causing fire and leading to an explosion of the secondary battery. Furthermore, the gas cannot be released in time, causing combustion and explosion of the secondary battery. Based on this, this application provides a secondary battery and an electronic apparatus.

A first aspect of this application provides a secondary battery. The secondary battery includes an electrode assembly and an electrolyte, where the electrode assembly includes a positive electrode sheet, a negative electrode sheet, and a separator disposed between the positive electrode sheet and the negative electrode sheet. The positive electrode sheet includes a positive electrode current collector, a positive electrode active material layer, and a positive electrode tab, where the positive electrode active material layer is disposed on at least one surface of the positive electrode current collector, and the positive electrode active material layer is provided with a first groove exposing the positive electrode current collector. The positive electrode tab is disposed in the first groove and connected to the positive electrode current collector. An insulating tape is provided on each of a surface of the positive electrode tab and a region, corresponding to the first groove, of a surface of the positive electrode sheet away from the positive electrode tab. A melting point of the insulating tape is 250°C to 450°C. The electrolyte includes carbonate and carboxylate. Based on a mass of the electrolyte, a mass percentage of the carbonate is denoted as A and a mass percentage of the carboxylate is denoted as B, where A and B satisfy: $75\% \leq A + B \leq 88\%$ and $1 < A / B$.

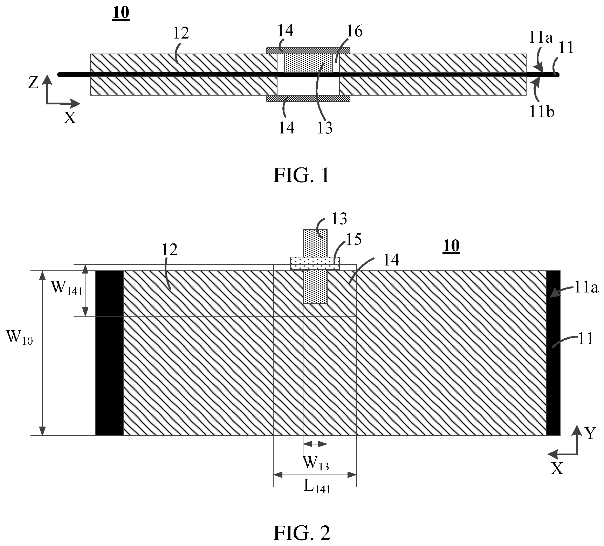

As shown in FIGs. 1 to 4, for ease of understanding, a three-dimensional re ctangular coordinate system is established with a length direction of the positive electr ode sheet 10 as a direction X, a width direction of the positive electrode sheet 10 as a direction Y, and a thickness direction of the positive electrode sheet 10 as a direction Z. It can be understood that length directions, width directions, and thickness direction s of the positive electrode current collector 11, the positive electrode active material la yer 12, the negative electrode sheet 20, and the separator are the same as those of the positive electrode sheet. "The positive electrode active material layer is disposed on at least one surface of the positive electrode current collector" means that the positive el ectrode active material layer is disposed on one surface or both surfaces of the positiv e electrode current collector, where the "surface" may be a partial surface of the positi ve electrode current collector or an entire surface of the positive electrode current coll ector. For example, in some embodiments, as shown in FIG. 1, the positive electrode c urrent collector 11 includes a first surface 11a and a second surface 11b. The positive electrode active material layer 12 is disposed on both surfaces of the positive electrod e current collector 11 that are the first surface 11a and the second surface 11b. In some other embodiments, the positive electrode active material layer 12 is disposed on one surface of the positive electrode current collector 11 that may be the first surface 11a o r the second surface 11b. As shown in FIGs. 1 and 2, the positive electrode active mat erial layer 12 is provided with a first groove 16 exposing the positive electrode current collector 11. The positive electrode tab 13 is disposed in the first groove 16 and conn ected to the positive electrode current collector 11. The positive electrode tab 13 is co nnected to the first surface 11a of the positive electrode current collector 11. A surface of the positive electrode tab 13 is provided with an insulating tape 14. As shown in FI Gs. 1 and 3, the insulating tape 14 is provided on a region, corresponding to the first g roove 16, of a surface of the positive electrode sheet 10 away from the positive electro de tab 13.

For example, the melting point of the insulating tape may be 250°C, 300°C , 350°C, 400°C, 450°C, or any value within a range defined by any two of the above v alues. When the melting point of the insulating tape is less than 250°C, the melting po int is excessively low. When a large amount of heat is generated in the secondary batte ry, the insulating tape is prone to thermal shrinkage, reducing the probability of maint aining its integrity as applied, causing the insulating tape to detach from the surface of the positive electrode tab, and making the positive electrode tab prone to exposure an d come into contact with the negative electrode sheet, thus expanding an area of an int ernal short circuit in the secondary battery, leading to a short circuit in the secondary b attery, and increasing the probability of safety risks at an electrode tab. An insulating t ape with a melting point greater than 450°C is difficult to produce and has a high cost, which increases the production cost of the secondary battery and is not conducive to l arge-scale industrial production.

For example, the value of A + B may be 75%, 76%, 78%, 80%, 82%, 84%, 86%, 88%, or any value within a range defined by any two of the above values. For e xample, the value of A / B may be 1.01, 1.05, 1.1, 1.15, 1.2, 1.25, 1.3, 1.35, 1.4, 1.45, 1.49, or any value within a range defined by any two of the above values. When the va lue of a total content A + B of carbonate and carboxylate in the electrolyte is greater th an 88%, contents of a lithium salt and an additive in the electrolyte are excessively lo w, and the insufficient lithium salt content affects the charging and discharging perfor mance of the secondary battery. The insufficient additive content makes it difficult for the additive to exert its effect, affecting the performance of the secondary battery rela ted to the additive. With a film-forming additive as an example, during an initial charg e-discharge cycle, the film-forming additive is decomposed before carbonate and carb oxylate are decomposed in the electrolyte, forming a stable solid electrolyte interface f ilm on a surface of the negative electrode sheet, thereby protecting the electrode from damage by carbonate and carboxylate, and improving the lifespan and safety performa nce of the secondary battery. An excessively low content of the film-forming additive affects the lifespan and safety performance of the secondary battery. When the total co ntent A + B of carbonate and carboxylate in the electrolyte is less than 75%, the ability to dissolve lithium salt is limited, reducing the number of lithium ions available for th e charging and discharging processes of the secondary battery, thus affecting the charg ing and discharging performance and cycle life of the secondary battery. Carbonate ha s good stability at high temperatures with a small gas production amount. Carboxylate has low viscosity, facilitating transport of lithium ions, and making the electrolyte ha ve high kinetic performance. When the value of A / B is less than or equal to 1, the rel ative content of carbonate in the solvent is excessively low, affecting the high-tempera ture stability of the electrolyte, which is not conducive to reducing the gas production amount of the electrolyte at high temperatures, thereby increasing the risk of explosio n due to the increased gas production amount in the secondary battery.

In this application, the insulating tape within the melting point range of thi s application is provided on each of the surface of the positive electrode tab and the re gion, corresponding to the first groove, of the surface of the positive electrode sheet a way from the positive electrode tab, and the total content of carbonate and carboxylate in the electrolyte and the content ratio A / B of carbonate and carboxylate are controll ed within the above ranges, so that during a high-temperature short-circuit test, when an internal temperature of the secondary battery rises rapidly and a large amount of he at is generated in the secondary battery, the insulating tape exhibits good high-tempera ture stability and low thermal shrinkage rate and can maintain its integrity as applied, providing effective protection to the positive electrode tab, and reducing the probabilit y of the positive electrode tab coming into contact with the negative electrode sheet af ter exposed and causing a short circuit. The electrolyte exhibits good stability at high t emperatures, few side reactions, and a small gas production amount, reducing the risk of deformation of the secondary battery and allowing the electrode sheets to maintain their original relative positions, thereby reducing the risk of an internal short circuit ca used by contact between the positive and negative electrode sheets. Thus, the insulatin g tape and the electrolyte work synergistically to increase a high-temperature short-cir cuit pass rate of the secondary battery, thereby improving the reliability of the seconda ry battery.

In an embodiment of this application, the melting point of the insulating ta pe is 250°C to 400°C. For example, the melting point of the insulating tape may be 25 0°C, 300°C, 350°C, 400°C, or any value within a range defined by any two of the abo ve values. The insulating tape with the melting point within the above range is produc ed more easily. Controlling the melting point of the insulating tape within the above ra nge can reduce the production cost of the secondary battery while increasing the high-temperature short-circuit pass rate of the secondary battery.

In an embodiment of this application, the positive electrode tab includes eit her an aluminum tab or an aluminum alloy tab.

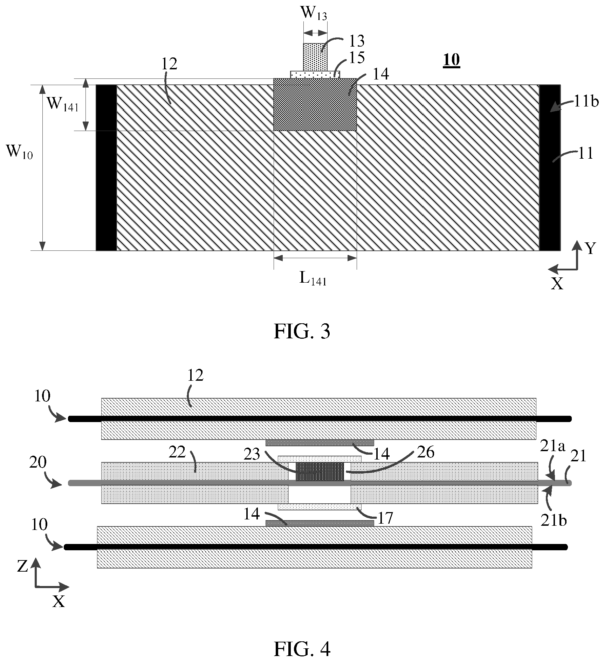

In an embodiment of this application, the negative electrode sheet includes a negative electrode current collector, a negative electrode active material layer, and a negative electrode tab, where the negative electrode active material layer is disposed on at least one surface of the negative electrode current collector. "The negative electr ode active material layer is disposed on at least one surface of the negative electrode c urrent collector" means that the negative electrode active material layer is disposed on one surface or both surfaces of the negative electrode current collector, where the "su rface" may be a partial surface of the negative electrode current collector or an entire s urface of the negative electrode current collector. The negative electrode active materi al layer is provided with a second groove exposing the negative electrode current colle ctor. The negative electrode tab is disposed in the second groove and connected to the negative electrode current collector. A tab protection tape is provided on a region, corr esponding to the second groove, of a surface of the negative electrode sheet away fro m the negative electrode tab. The insulating tape is provided on each of a region of a s urface of the positive electrode sheet opposite the second groove and a region of the s urface of the positive electrode sheet opposite the tab protection tape. It should be not ed that the positive electrode sheet in the "region of the surface of the positive electro de sheet opposite the second groove" and the positive electrode sheet in the "region of the surface of the positive electrode sheet opposite the tab protection tape" are not the same layer of positive electrode sheets, but are two layers of positive electrode sheets respectively adjacent to the negative electrode sheet. The "two layers of positive elect rode sheets" may be two positive electrode sheets or two layers formed by winding on e positive electrode sheet. As shown in FIG. 4, the negative electrode sheet 20 include s a negative electrode current collector 21, a negative electrode active material layer 2 2, and a negative electrode tab 23, where the negative electrode current collector 21 in cludes a third surface 21a and a fourth surface 21b. The negative electrode active mate rial layer 22 is disposed on the third surface 21a and the fourth surface 21b of the nega tive electrode current collector 21. The negative electrode active material layer 22 is p rovided with a second groove 26 exposing the negative electrode current collector 21. The negative electrode tab 23 is disposed in the second groove 26 and connected to th e negative electrode current collector 21. The negative electrode tab 23 is connected to the third surface 21a of the negative electrode current collector 21. A surface of the ne gative electrode tab 23 is provided with a tab protection tape 17, and a surface of the n egative electrode sheet 20 away from the negative electrode tab 23 is provided with th e tab protection tape 17. An insulating tape 14 is provided on a region of a surface of t he positive electrode sheet 10 opposite the second groove 26. The insulating tape 14 is also provided on a region opposite the tab protection tape 17 which is provided on ea ch of regions, corresponding to the second groove 26, of the surface of the positive ele ctrode sheet 10 and the surface of the negative electrode sheet 20 away from the negat ive electrode tab 23. The insulating tape is provided on each of the region of the surfa ce of the positive electrode sheet opposite the second groove and the regions opposite the tab protection tapes provided on the surface of the positive electrode sheet and the surface of the negative electrode sheet facing away from the second groove, so that th e risk of the internal short circuit in the secondary battery at high temperatures can be further reduced. Thus, the high-temperature short-circuit pass rate of the secondary ba ttery is increased, thereby improving the reliability of the secondary battery.

In an embodiment of this application, the negative electrode tab includes a ny one of a nickel tab or a copper-plated nickel tab.

This application imposes no particular limitation on the type of the tab prot ection tape, and those skilled in the art may select the tab protection tape known in the art based on actual needs, provided that the objective of this application can be achiev ed.

In an embodiment of this application, the insulating tape includes a substra te and an adhesive layer disposed on one surface of the substrate, where the substrate i ncludes at least one of polyethylene terephthalate, polyimide, or polypropylene. The s ubstrates of the above types have high melting points and good thermal stability, and s electing such substrates is conducive to allowing the insulating tape to have a high me lting point. Thus, when the secondary battery is in a high-temperature state, the insulat ing tape has a low thermal shrinkage rate and good thermal stability and can maintain its integrity as applied, protecting the positive electrode tab with the insulating tape, re ducing the probability of contact with the negative electrode sheet, and reducing an ar ea of the internal short circuit in the secondary battery, thereby reducing the probabilit y of the internal short circuit in the secondary battery, and increasing the high-tempera ture short-circuit pass rate of the secondary battery.

This application imposes no particular limitation on the material type of th e adhesive layer, and those skilled in the art may select materials known in the art based on actual needs, provided that the objective of this application can be achieved. For example, the material of the adhesive layer includes at least one of acrylate, rubber, or silicone. Further, the acrylate includes at least one of methyl methacrylate, butyl acrylate, butyl methacrylate, isooctyl acrylate, or octyl methacrylate; and the rubber includes at least one of isoprene or styrene.

In an embodiment of this application, as shown in FIG. 2, along a length direction X of the positive electrode sheet 10, a length $L_{141}$ of the insulating tape 14 provided on the surface of the positive electrode tab is 3 to 4 times a width $W_{13}$ of the positive electrode tab 13. For example, the length of the insulating tape provided on the surface of the positive electrode tab is 3 times, 3.2 times, 3.4 times, 3.6 times, 3.8 times, 4 times, or any value within a range defined by any two of the above values relative to the width of the positive electrode tab. It should be noted that a width direction of the positive electrode tab is the same as the length direction of the positive electrode sheet, and a length direction of the positive electrode tab is the same as a width direction of the positive electrode sheet. The length of the insulating tape provided on the surface of the positive electrode tab is controlled within the above range, so that when the secondary battery is in the high-temperature state, the insulating tape can cover the surface of the positive electrode tab, protecting the positive electrode tab with the insulating tape, reducing the probability of contact with the negative electrode sheet, and reducing the area of the internal short circuit in the secondary battery, thereby reducing the probability of the internal short circuit in the secondary battery, and increasing the high-temperature short-circuit pass rate of the secondary battery.

In an embodiment of this application, as shown in FIG. 2, along a width direction Y of the positive electrode sheet 10, a width $W_{141}$ of the insulating tape 14 provided on the surface of the positive electrode tab is 0.25 to 0.4 times a width $W_{10}$ of the positive electrode sheet 10. For example, the width of the insulating tape provided on the surface of the positive electrode tab is 0.25 times, 0.28 times, 0.31 times, 0.34 times, 0.37 times, 0.4 times, or any value within a range defined by any two of the above values relative to the width of the positive electrode sheet. The width of the insulating tape provided on the surface of the positive electrode tab is controlled within the above range, so that when the secondary battery is in the high-temperature state, the insulating tape can cover the surface of the positive electrode tab, protecting the positive electrode tab with the insulating tape, reducing the probability of contact with the negative electrode sheet, and reducing the area of the internal short circuit in the secondary battery, thereby reducing the probability of the internal short circuit in the secondary battery, and increasing the high-temperature short-circuit pass rate of the secondary battery.

In this application, there is no particular limitation on the size specification of the insulating tape provided at positions other than the surface of the positive electrode tab, and those skilled in the art may select based on actual needs, provided that the objective of this application can be achieved.

In an embodiment of this application, along a length direction and width direction of the insulating tape, thermal shrinkage rates of the insulating tape at a temperature of 300°C are both less than or equal to 1%. For example, along the length direction of the insulating tape, the thermal shrinkage rate at the temperature of 300°C is 0%, 0.2%, 0.4%, 0.6%, 0.8%, 1%, or any value within a range defined by any two of the above values. For example, along the width direction of the insulating tape, the thermal shrinkage rate of the insulating tape at the temperature of 300°C is 0%, 0.2%, 0.4%, 0.6%, 0.8%, 1%, or any value within a range defined by any two of the above values. This indicates that the insulating tape has good high-temperature stability at the temperature of 300°C.

In an embodiment of this application, the secondary battery includes a packaging bag. The electrode assembly and the electrolyte are accommodated in the packaging bag. The positive electrode tab and the negative electrode tab extend from the packaging bag. The positive electrode tab and the negative electrode tab are each provided with a sealing adhesive, where the sealing adhesive is sealingly connected to the packaging bag. A melting point of the sealing adhesive is 130°C to 150°C. For example, the melting point of the sealing adhesive may be 130°C, 135°C, 140°C, 145°C, 150°C, or any value within a range defined by any two of the above values. For example, as shown in FIG. 2, the positive electrode tab 13 is provided with a sealing adhesive 15. The melting point of the sealing adhesive is controlled within the above range, so that when the internal temperature of the secondary battery reaches the melting point range of the sealing adhesive, the sealing adhesive melts to reduce the sealing strength of a connection region between the sealing adhesive and the packaging bag, allowing gas generated at high temperatures to escape from the connection region between the sealing adhesive and the packaging bag, and reducing the accumulation of heat and deformation inside the secondary battery, thereby further improving the reliability of the secondary battery.

In an embodiment of this application, the sealing adhesive includes at least one of polypropylene (PP), polyethylene, polyethylene terephthalate (PET), or polyethylene naphthalate (PEN). This application imposes no particular limitation on the structure of the sealing adhesive, provided that the objective of this application can be achieved. For example, the sealing adhesive may have a single-layer structure or a multi-layer structure, where multi-layer may refer to two layers, three layers, or four layers. For example, the sealing adhesive with the multi-layer structure includes but is not limited to PP/PET/PP and PP/PEN/PP.

In an embodiment of this application, the carbonate includes at least one of ethylene carbonate (EC, also known as vinylene carbonate), propylene carbonate (PC, also known as propyl carbonate), butylene carbonate (BC), dimethyl carbonate (DMC), ethyl methyl carbonate (EMC), diethyl carbonate (DEC), dipropyl carbonate (DPC), methyl propyl carbonate (MPC), ethyl propyl carbonate (EPC), dioctyl carbonate, dipentyl carbonate, ethyl isobutyl carbonate, isopropyl methyl carbonate, di-n-butyl car bonate, diisopropyl carbonate, or propyl carbonate. The carboxylate includes at least o ne of ethyl acetate, propyl propionate, butyl acetate, ethyl propionate, propyl acetate ( EP), or butyl propionate.

In an embodiment of this application, the carbonate includes at least one of ethylene carbonate (EC), propylene carbonate (PC), or diethyl carbonate (DEC). The carboxylate includes at least one of propyl acetate (EP) or propyl propionate. In some embodiments, the carbonate includes EC, PC, and DEC, and the carboxylate includes EP and propyl propionate. $75\% \leq A + B \leq 88\%$, and $2\% \leq A - B \leq 5\%$. For example, A + B may be 75%, 76%, 78%, 80%, 82%, 83%, 84%, 85%, 86%, 87%, 88%, or any value within a range defined by any two of the above values. For example, the value o f A - B may be 2%, 2.5%, 3%, 3.5%, 4%, 4.5%, 5%, or any value within a range defin ed by any two of the above values. Selecting the above types of carbonates and carbox ylates and controlling the total mass A + B of the carbonate and the carboxylate and th e content difference A - B of the carbonate and the carboxylate within the above range s can further reduce the gas production amount of the electrolyte at high temperatures, thereby further reducing the probability of explosion due to a large gas production am ount inside the secondary battery, and further improving the reliability of the secondar y battery.

Further, based on a mass of the electrolyte, a mass percentage of DEC is 5 % to 10%, a mass percentage of EC is 10% to 20%, a mass percentage of PC is 20% t o 25%, a mass percentage of EP is 10% to 20%, and a mass percentage of propyl prop ionate is 20% to 25%.

In an embodiment of this application, the electrolyte includes carbonate, ca rboxylate, and a lithium salt. This application imposes no particular limitation on the c ontent of the lithium salt, provided that the objective of this application can be achieve d. In an embodiment of this application, based on the mass of the electrolyte, a mass p ercentage of the lithium salt is 8% to 15%. For example, the mass percentage of the lit hium salt may be 8%, 9%, 10%, 11%, 12%, 13%, 14%, 15%, or any value within a ra nge defined by any two of the above values.

This application imposes no particular limitation on the type of the lithium salt, provided that the objective of this application can be achieved. For example, the l ithium salt includes but is not limited to at least one of $LiPF_6$, $LiBF_4$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or LiDFO B.

In an embodiment of this application, the electrolyte includes carbonate, ca rboxylate, a lithium salt, and an additive. This application imposes no particular limita tion on the content of the additive, provided that the objective of this application can b e achieved. For example, based on the mass of the electrolyte, a mass percentage of th e additive is 4% to 15%. For example, the mass percentage of the additive may be 4%, 6%, 8%, 10%, 12%, 14%, 15%, or any value within a range defined by any two of th e above values.

This application imposes no particular limitation on the type of the additiv e, provided that the objective of this application can be achieved. For example, in som e embodiments, the additive includes but is not limited to at least one of succinonitrile , adiponitrile, pimelonitrile, suberonitrile, 1,4-dicyano-2-butene, 1,4-dicyano-2-methyl -2-butene, 1,4-dicyano-2-ethyl-2-butene, 1,4-dicyano-2,3-dimethyl-2-butene, 1,4-dicy ano-2,3-diethyl-2-butene, 1,6-dicyano-3-hexene, 1,6-dicyano-2-methyl-3-hexene, 1,6-dicyano-2-methyl-5-methyl-3-hexene, ethylene glycol dicyanoether, 1,3,6-hexanetrica rbonitrile, or 1,2,3-tris(2-cyanooxy)propane. In some other embodiments, the additive includes but is not limited to at least one of succinonitrile, adiponitrile, or 1,3,6-hexan etricarbonitrile.

This application imposes no particular limitation on the type of the positive electrode current collector, provided that the objective of this application can be achie ved. For example, the positive electrode current collector may include an aluminum fo il, an aluminum alloy foil, and the like.

This application imposes no particular limitation on the positive electrode active material layer, provided that the objective of this application can be achieved. I n an embodiment of this application, the positive electrode active material layer includ es a positive active material. This application imposes no particular limitation on the t ype of the positive active material, provided that the objective of this application can b e achieved. For example, the positive active material may include at least one of lithiu m nickel cobalt manganese oxide, lithium nickel cobalt aluminum oxide, lithium iron phosphate, a lithium-rich manganese-based material, lithium cobalt oxide, lithium ma nganese oxide, lithium manganese iron phosphate, or lithium titanate. Optionally, the positive electrode active material layer further includes a positive electrode conductiv e agent and a positive electrode binder. This application imposes no particular limitati on on the types of the positive electrode conductive agent and positive electrode binde r in the positive electrode active material layer, provided that the objective of this appl ication can be achieved. This application imposes no particular limitation on a mass ra tio of the positive active material, positive electrode conductive agent, and positive ele ctrode binder in the positive electrode active material layer, and those skilled in the art may select based on actual needs, provided that the objective of this application can b e achieved. For example, the mass ratio of the positive active material, positive electro de conductive agent, and positive electrode binder in the positive electrode active mat erial layer is (97.5-97.9):(0.9-1.7):(1.0-2.0).

This application imposes no particular limitation on the thickness of the po sitive electrode current collector and the positive electrode active material layer, provi ded that the objective of this application can be achieved. For example, a thickness of the positive electrode current collector is 5 $\mu$m to 20 $\mu$m, and a thickness of the positiv e electrode active material layer is 30 $\mu$m to 120 $\mu$m.

This application imposes no particular limitation on the negative electrode current collector, provided that the objective of this application can be achieved. For e xample, the negative electrode current collector may include a copper

foil, a copper alloy foil, a nickel foil, a titanium foil, nickel foam, or copper foam.

This application imposes no particular limitation on the negative electrode active material layer, provided that the objective of this application can be achieved. In an embodiment of this application, the negative electrode active material layer includes a negative electrode active material. This application imposes no particular limitation on the type of the negative electrode active material, provided that the objective of this application can be achieved. For example, the negative electrode active material may include at least one of natural graphite, artificial graphite, soft carbon, hard carbon, mesocarbon microbeads, a tin-based material, a silicon-based material, lithium titanate, transition metal nitride, or natural flake graphite. Optionally, the negative electrode active material layer further includes at least one of a negative electrode conductive agent, a thickener, or a negative electrode binder. This application imposes no particular limitation on the types of the negative electrode conductive agent, thickener, and negative electrode binder in the negative electrode active material layer, provided that the objective of this application can be achieved. This application imposes no particular limitation on a mass ratio of the negative electrode active material, negative electrode conductive agent, thickener, and negative electrode binder in the negative electrode active material layer, provided that the objective of this application can be achieved. For example, the mass ratio of the negative electrode active material, negative electrode conductive agent, thickener, and negative electrode binder in the negative electrode active material layer is (97-98):(0-1.5):(0.5-1.5):(1.0-1.9).

This application imposes no particular limitation on the thickness of the negative electrode current collector and the negative electrode active material layer, provided that the objective of this application can be achieved. For example, a thickness of the negative electrode current collector is 5 $\mu$m to 20 $\mu$m, and a thickness of the negative electrode active material layer is 30 $\mu$m to 120 $\mu$m.

This application imposes no particular limitation on the separator, provided that the objective of this application can be achieved. For example, the material of the separator may include but is not limited to at least one of polyethylene (PE), polypropylene (PP)-based polyolefin (PO), polyester (for example, a polyethylene terephthalate (PET) film), cellulose, polyimide (PI), polyamide (PA), spandex, or aramid. The type of the separator may include at least one of a woven film, a non-woven film, a microporous film, a composite film, a calendered film, or a spun film.

This application imposes no particular limitation on the packaging bag, and those skilled in the art may select a packaging bag known in the art based on actual needs, provided that the objective of this application can be achieved.

This application imposes no particular limitation on the type of the secondary battery. The secondary battery may include any apparatus undergoing an electrochemical reaction. For example, the secondary battery may include but is not limited to a lithium metal secondary battery, a lithium-ion secondary battery (lithium-ion battery), a sodium-ion secondary battery (sodium-ion battery), a lithium polymer secondary battery, and a lithium-ion polymer secondary battery.

This application imposes no particular limitation on a preparation method of the secondary battery, and preparation methods known in the art may be selected, provided that the objective of this application can be achieved. For example, the preparation method of the secondary battery includes but is not limited to the following steps: stacking the positive electrode sheet, the separator, and the negative electrode sheet in sequence, attaching the insulating tape, and performing operations such as winding and folding as needed to obtain an electrode assembly with a wound structure, placing the electrode assembly into the packaging bag, injecting the electrolyte into the packaging bag, and sealing to obtain the secondary battery; or stacking the positive electrode sheet, the separator, and the negative electrode sheet in sequence, attaching the insulating tape, and fixing four corners of an entire laminated structure to obtain an electrode assembly with a laminated structure, placing the electrode assembly into the packaging bag, injecting the electrolyte into the packaging bag, and sealing to obtain the secondary battery.

A second aspect of this application provides an electronic apparatus including the secondary battery according to any one of the foregoing embodiments. Therefore, the electronic apparatus has good reliability.

The electronic apparatus of this application is not particularly limited and may include but is not limited to the following types: a notebook computer, a pen-input computer, a mobile computer, an e-book reader, a portable phone, a portable fax machine, a portable copier, a portable printer, a head-mounted stereo headphone, a video recorder, a liquid crystal display television, a portable cleaner, a portable CD player, a mini-disc player, a transceiver, an electronic notebook, a calculator, a memory card, a portable recorder, a radio, a backup power source, a motor, an automobile, a motorcycles, an electric bicycle, a bicycle, a lighting fixture, a toy, a gaming console, a clock, an electric tool, a flashlight, a camera, a large household battery, and a lithium-ion capacitor.

Examples

Examples and comparative examples are provided below to more specifically illustrate some embodiments of this application. Various tests and evaluations were conducted according to the following methods.

Test methods and devices:

1. Test for thermal shrinkage rate:

An insulating tape sample was taken, and the length and width of the samp le were measured as A and B. Then, the sample was placed in an oven at 300°C for 1 h; and the length and width of the sample after baked at a high temperature were meas ured as A' and B'.

A thermal shrinkage rate $S_L$ (%) in a length direction was equal to [1 - (A'/ A)] × 100%.

A thermal shrinkage rate $S_W$ (%) in a width direction was equal to [1 - (B'/ B)] × 100%.

2. Test of high-temperature short-circuit pass rate:

(1) Pre-treatment: A lithium-ion battery after fully charged at room temper ature (25°C ± 2°C) was used as a sample. The steps of fully charging the sample invol ved charging the sample to 4.5 V at a constant current of 0.2C, and then charging the s ample to 0.25C at a constant voltage of 4.5 V.

(2) The sample was placed in a test environment at 55 ± 2°C, a load resista nce of 60 ± 20 mΩ was used to short-circuit positive and negative electrodes of the sa mple, and testing was performed until the voltage was lower than 0.1 V.

(3) The test ended when one of the following conditions was met:

(1) When the voltage of the sample was lower than 0.1 V, and a surface te mperature of a main body region dropped to ± 10°C relative to the test environment te mperature, then the test was stopped.

(2) If the voltage was unable to drop to 0.1 V, the test was stopped when th e surface temperature of the main body region dropped to the test environment temper ature.

The main body region referred to a region of an electrode assembly accom modated in the lithium-ion battery where a positive electrode sheet, a negative electro de sheet, and a separator were all in a flat state.

3. Measurement frequency:

Voltage and internal resistance measurements were conducted using a spec ification of 1 KHz. Measurement was performed once after pre-treatment in step (1) a nd once after the test in step (3).

Judgment criteria: No explosion occurred, the sample surface temperature did not exceed 150°C, and no fire occurred.

100 lithium-ion batteries from examples and comparative examples were t ested. A high-temperature short-circuit pass rate (%) was equal to the number of samp les passed the test / 100 × 100%.

Example 1-1

<Preparation of insulating tape>

An insulating tape included a substrate and an adhesive layer, where the ad hesive layer was disposed on one surface of the substrate, the substrate was polyimide , and the material of the adhesive layer was styrene.

A melting point of the insulating tape was 400°C.

<Preparation of sealing adhesive>

A structure of a sealing adhesive was a single-layer structure, where the se aling adhesive included polypropylene and polyethylene, and a mass ratio of polyprop ylene to polyethylene was 2:1.

A melting point of the sealing adhesive was 140°C.

<Preparation of electrolyte>

In a dry argon atmosphere glovebox, diethyl carbonate (DEC), propylene c arbonate (PC), ethylene carbonate (EC), propyl acetate (EP), and propyl propionate w ere mixed to obtain a solvent, then additives succinonitrile, adiponitrile, and 1,3,6-hex anetricarbonitrile as well as a lithium salt $LiBF_4$ were added into the solvent, dissolve d, and mixed well to obtain an electrolyte. Based on a mass of the electrolyte, a mass percentage $N_{DEC}$ of DEC was 8%, a mass percentage $N_{PC}$ of PC was 23%, a mass perc entage $N_{EC}$ of EC was 13%, a mass percentage $N_{EP}$ of EP was 18%, a mass percentage $N_{PP}$ of propyl propionate was 23%, a mass percentage of succinonitrile was 2%, a ma ss percentage of adiponitrile was 3%, a mass percentage of 1,3,6-hexanetricarbonitrile was 3%, and a mass percentage $N_L$ of $LiBF_4$ was 7%.

<Preparation of positive electrode sheet>

A positive active material $LiCoO_2$, a positive electrode conductive agent co nductive carbon black (Super P), and a positive electrode binder PVDF were mixed at a mass ratio of 97.5:1:1.5, and NMP was added as a solvent. Stirring was performed u nder a vacuum mixer to obtain a positive electrode slurry with a solid content of 75wt % and a uniform system. The positive electrode slurry was uniformly applied on one s urface of a positive electrode current collector aluminum foil with a thickness of 10 $\mu$m, followed by drying at 85°C to obtain a positive electrode sheet with one surface co ated with a positive electrode active material layer (with a thickness of 50 $\mu$m). Then, the above steps were repeated on another surface of the aluminum foil to obtain a posi tive electrode sheet with double surfaces coated with the positive electrode active mat erial layer. Then, through processes of cold pressing, cutting, and welding an aluminu m tab as a positive electrode tab, a positive electrode sheet with specifications of 96 m m $\times$ 851 mm was obtained for use. The positive electrode tab is provided with the abo ve sealing adhesive.

<Preparation of negative electrode sheet>

A negative electrode active material graphite, a negative electrode conducti ve agent Super P, a thickener carboxymethyl cellulose, and a negative electrode binder styrene-butadiene rubber (SBR) were mixed at a mass ratio of 97.5:1:0.5:1, and deion ized water was added as a solvent. Stirring was performed under a vacuum mixer to o btain a negative electrode slurry with a solid content of 50wt% and a uniform system. The negative electrode slurry was uniformly applied on one surface of a negative elect rode current collector copper foil with a thickness of 8 $\mu$m, followed by drying at 85° C to obtain a negative electrode sheet with one surface coated with a negative electrod e active material layer (with a thickness of 60 $\mu$m). Then, the above steps were repeate d on another surface of the copper foil to obtain a negative electrode sheet with double surfaces coated with the negative electrode active material layer. Then, through proce sses of cold pressing, cutting, and welding a nickel tab as a negative electrode tab, a n egative electrode sheet with specifications of 98 mm $\times$ 867 mm was obtained for use. The negative electrode tab is provided with the above sealing adhesive.

<Preparation of separator>

A polyethylene film with a thickness of 15 $\mu$m (manufacturer: Hunan Zhon gli New Material Co., Ltd.) was used.

<Preparation of lithium-ion battery>

The prepared negative electrode sheet, separator, and positive electrode she et were stacked and wound in sequence to obtain an electrode assembly with a wound structure. The electrode assembly was placed in an aluminum-plastic film packaging b ag, followed by drying and electrolyte injection. Then, processes such as vacuum pack aging, standing, formation, capacity testing, degassing, and trimming to obtain a lithiu m-ion battery.

As shown in FIG. 1, the insulating tape was attached on the surface of the positive electrode tab, and the insulating tape was attached on a region, corresponding to a first groove, of a surface of the positive electrode sheet away from the positive el ectrode tab. As shown in FIG. 4, the insulating tape was attached on a region of a surf ace of the positive electrode sheet opposite a second groove, and the insulating tape w as attached on regions opposite tab protection tapes provided on the surface of the pos itive electrode sheet and a surface of the negative electrode sheet facing away from th e second groove.

Along a length direction of the positive electrode sheet, a length of the insu lating tape provided on the surface of the positive electrode tab was 3.5 times a width of the positive electrode tab, where the width $W_{13}$ of the positive electrode tab was 6 mm, and the length $L_{141}$ of the insulating tape was 21 mm. Along a width direction of the positive electrode sheet, a width of the insulating tape provided on the surface of t he positive electrode tab was 0.3 times a width of the positive electrode sheet, where t he width $W_{10}$ of the positive electrode sheet was 96 mm, and the width $W_{141}$ of the ins ulating tape was 29 mm.

Example 1-2

This example was the same as Example 1-1 except that the substrate in <pr eparation of insulating tape> was adjusted to polyethylene terephthalate such that the melting point of the insulating tape was 250°C.

Examples 1-3 to 1-11

These examples were the same as Example 1-1 except that the relevant pre paration parameters were adjusted according to Table 1.

When the mass percentages of carbonate and carboxylate changed, the mas s percentage of the lithium salt changed accordingly, the mass percentage of the additi ve remained unchanged, and the sum of the mass percentages of carbonate, carboxylat e, the lithium salt, and the additive was 100%.

Examples 2-1 to 2-8

These examples were the same as Example 1-1 except that the relevant pre paration parameters were adjusted according to Table 2.

When the times of the length of the insulating tape provided on the surface of the positive electrode tab relative to the width of the positive electrode tab changed , the width of the positive electrode tab remained unchanged, and the length of the ins ulating tape changed. When the times of the width of the insulating tape provided on t he surface of the positive electrode tab relative to the width of the positive electrode s heet changed, the width of the positive electrode sheet remained unchanged, and the w idth of the insulating tape changed.

Example 2-9

This example was the same as Example 1-1 except that the mass ratio of p olypropylene to polyethylene in <preparation of sealing adhesive> was adjusted to 1:3 such that the melting point of the sealing adhesive was 130°C.

Example 2-10

This example was the same as Example 1-1 except that the mass ratio of p olypropylene to polyethylene in <preparation of sealing adhesive> was adjusted to 4:1 such that the melting point of the sealing adhesive was 150°C.

Example 2-11

This example was the same as Example 1-1 except that the mass ratio of p olypropylene to polyethylene in <preparation of sealing adhesive> was adjusted to 1:4 such that the melting point of the sealing adhesive was 120°C.

Example 2-12

This example was the same as Example 1-1 except that the mass ratio of p olypropylene to polyethylene in <preparation of sealing adhesive> was adjusted to 6:1 such that the melting point of the sealing adhesive was 160°C.

Comparative Example 1

This comparative example was the same as Example 1-1 except that the su bstrate in <preparation of insulating tape> was adjusted to a biaxially oriented polypro pylene (BOPP) film such that the melting point of the insulating tape was 200°C.

Comparative Examples 2 to 5

These comparative examples were the same as Example 1-1 except that the relevant preparation parameters were adjusted according to Table 1.

When the mass percentages of carbonate and carboxylate changed, the mas s percentage of lithium salt changed accordingly, the mass percentage of additives rem ained unchanged, and the sum of the mass percentages of carbonate, carboxylate, the l ithium salt, and the additive was 100%.

Comparative Examples 6 and 7

These comparative examples were the same as Comparative Example 1 ex cept that the relevant preparation parameters were adjusted according to Table 1.

When the mass percentages of carbonate and carboxylate changed, the mas s percentage of lithium salt changed accordingly, the mass percentage of the additive r emained unchanged, and the sum of the mass percentages of carbonate, carboxylate, t he lithium salt, and the additive was 100%.

The preparation parameters and performance parameters of examples and c omparative examples were shown in Tables 1 and 2.

Table 1

| | Melting point of insulating tape (°C) | Carbonate type | A (%) | Carboxylate type | B (%) | A + B (%) | A/B | A - B (%) | $S_L$ ( %) | $S_W$ ( %) | High-temperature short-circuit pass rate (%) |
|---|---|---|---|---|---|---|---|---|---|---|---|
| Example 1 -1 | 400 | DEC + PC + EC | 8 + 23 + 13 | EP + PP | 18 + 23 | 85 | 1.07 | 3 | 0.70 | 0.60 | 100 |
| Example 1 -2 | 250 | DEC + PC + EC | 8 + 23 + 13 | EP + PP | 18 + 23 | 85 | 1.07 | 3 | 1 | 1 | 75 |
| Example 1 -3 | 400 | DEC + PC + EC | 7 + 24.5 + 10 | EP + PP | 17 + 21 .5 | 80 | 1.08 | 3 | 0.70 | 0.60 | 100 |
| Example 1 -4 | 400 | DEC + PC + EC | 10 + 19.5 +13 | EP + PP | 18 + 21 .5 | 82 | 1.08 | 3 | 0.70 | 0.60 | 100 |
| Example 1 -5 | 400 | DEC + PC + EC | 9 + 24.5 + 12 | EP + PP | 19 + 23 .5 | 88 | 1.07 | 3 | 0.70 | 0.60 | 100 |
| Example 1 -6 | 400 | DEC + PC + EC | 7 + 19.5 + 12. 5 | EP + PP | 14 + 22 | 75 | 1.08 | 3 | 0.70 | 0.60 | 100 |
| Example 1 -7 | 400 | DEC + PC + EC | 10 + 20 + 19. 5 | EP + PP | 13.5 + 20 | 83 | 1.48 | 16 | 0.70 | 0.60 | 90 |
| Example 1 -8 | 400 | DEC + PC + EC | 8 + 23.5 + 12 | EP + PP | 18 + 23 .5 | 85 | 1.05 | 2 | 0.70 | 0.60 | 100 |
| Example 1 -9 | 400 | DEC + PC + EC | 8 + 24 + 13 | EP + PP | 17 + 23 | 85 | 1.13 | 5 | 0.70 | 0.60 | 100 |
| Example 1 -10 | 400 | DEC + PC + EC | 8 + 21.5 + 13. 5 | EP + PP | 18 + 24 | 85 | 1.02 | 1 | 0.70 | 0.60 | 85 |
| Example 1 -11 | 400 | DEC + PC + EC | 9 + 23 + 13.5 | EP + PP | 16.5 + 23 | 85 | 1.15 | 6 | 0.70 | 0.60 | 88 |
| Comparative Example 1 | 200 | DEC + PC + EC | 8 + 23 + 13 | EP + PP | 18 + 23 | 85 | 1.07 | 3 | 6 | 10 | 50 |

(continued)

| | Melting point of insulating tape (°C) | Carbonate type | A (%) | Carboxylate type | B (%) | A + B (%) | A/B | A - B (%) | $S_L$ (%) | $S_W$ (%) | High-temperature short-circuit pass rate (%) |
|---|---|---|---|---|---|---|---|---|---|---|---|
| Comparative Example 2 | 400 | DEC + PC + EC | 6 + 19 + 10 | EP + PP | 15 + 18 | 68 | 1.06 | 2 | 0.70 | 0.60 | 65 |
| Comparative Example 3 | 400 | DEC + PC + EC | 8 + 23 + 12 | EP + PP | 22 + 25 | 90 | 0.9 | -4 | 0.70 | 0.60 | 60 |
| Comparative Example 4 | 400 | DEC + PC + EC | 6 + 19 + 10 | EP + PP | 19 + 24 | 78 | 0.8 | -8 | 0.70 | 0.60 | 50 |
| Comparative Example 5 | 400 | DEC + PC + EC | 15 + 25 + 20 | EP + PP | 10 + 20 | 90 | 2 | -30 | 0.70 | 0.60 | 70 |
| Comparative Example 6 | 200 | DEC + PC + EC | 6 + 19 + 10 | EP + PP | 19 + 24 | 68 | 0.8 | -4 | 6 | 10 | 40 |
| Comparative Example 7 | 200 | DEC + PC + EC | 15 + 25 + 20 | EP + PP | 10 + 20 | 90 | 2 | -30 | 6 | 10 | 50 |

From Examples 1-1 to 1-11 and Comparative Examples 1 to 7, it can be se en that the secondary battery in each of the examples of this application is provided wi th the insulating tape within the melting point range of this application on each of the surface of the positive electrode tab and the region, corresponding to the first groove, of the surface of the positive electrode sheet away from the positive electrode tab, and the total mass A + B of carbonate and carboxylate in the electrolyte and the content ra tio A / B of carbonate and carboxylate are within the ranges of this application, so that the insulating tape has relatively low thermal shrinkage rates in the length direction a nd the width direction, and the high-temperature short-circuit pass rate of the secondar y battery is higher, indicating that the secondary battery has higher reliability. In contr ast, the secondary battery in each of the comparative examples is provided with the in sulating tape on the surface of the positive electrode tab and the region, corresponding to the first groove, of the surface of the positive electrode sheet away from the positiv e electrode tab, and at least one of the total mass A + B of carbonate and carboxylate i n the electrolyte or the content ratio A / B of carbonate and carboxylate is not within t he range of this application, so that the high-temperature short-circuit pass rate is lowe r, indicating that the secondary battery in each of the comparative examples has poor r eliability.

The melting point of the insulating tape typically affects the reliability of t he secondary battery. From Examples 1-1, Example 1-2, and Comparative Example 1, it can be seen that the secondary battery with the insulating tape having the melting p oint within the range of this application is used, the insulating tape has relatively low t hermal shrinkage rates in the length direction and the width direction, and the high-te mperature short-circuit pass rate of the secondary battery is relatively high, indicating that the secondary battery has good reliability.

The total mass A + B of carbonate and carboxylate in the electrolyte, the va lue of the content ratio A / B of carbonate and carboxylate, and the value of the conten t difference A - B of carbonate and carboxylate typically affect the reliability of the se condary battery. From Example 1-1, Examples 1-3 to 1-11, and Comparative Example s 2 to 7, it can be seen that the secondary battery with the total mass A + B of carbonat e and carboxylate in the electrolyte and the content ratio A / B of carbonate and carbo xylate within the ranges of this application is used, the insulating tape has relatively lo w thermal shrinkage rates in the length direction and the width direction, and the high-temperature short-circuit pass rate of the secondary battery is relatively high, indicatin g that the secondary battery has good reliability.

Table 2

| | Times of length of insulating tape on surface of positive electrode tab relative to width of positive el ectrode tab | Times of width of in sulating tape on surface of positive electrode tab relative to width of positive electrode sheet | Melting point of sealing adhesive (°C ) | $S_L$ (%) | $S_W$ (%) | High-temperature short-circuit pass rate (%) |
|---|---|---|---|---|---|---|
| Example 1-1 | 3.5 times | 0.3 times | 140 | 0.7 | 0.6 | 100 |
| Example 2-1 | 3 times | 0.3 times | 140 | 0.7 | 0.6 | 95 |
| Example 2-2 | 4 times | 0.3 times | 140 | 0.7 | 0.6 | 100 |
| Example 2-3 | 2 times | 0.3 times | 140 | 0.7 | 0.6 | 90 |
| Example 2-4 | 5 times | 0.3 times | 140 | 0.7 | 0.6 | 100 |
| Example 2-5 | 3.5 times | 0.25 times | 140 | 0.7 | 0.6 | 100 |
| Example 2-6 | 3.5 times | 0.4 times | 140 | 0.7 | 0.6 | 100 |
| Example 2-7 | 3.5 times | 0.15 times | 140 | 0.7 | 0.6 | 85 |
| Example 2-8 | 3.5 times | 0.5 times | 140 | 0.7 | 0.6 | 100 |
| Example 2-9 | 3.5 times | 0.3 times | 130 | 0.7 | 0.6 | 93 |
| Example 2-10 | 3.5 times | 0.3 times | 150 | 0.7 | 0.6 | 92 |
| Example 2-11 | 3.5 times | 0.3 times | 120 | 0.7 | 0.6 | 75 |
| Example 2-12 | 3.5 times | 0.3 times | 160 | 0.7 | 0.6 | 77 |

The times of the length of the insulating tape on the surface of the positive electrode tab relative to the width of the positive electrode tab and the times of the wi dth of the insulating tape relative to the width of the positive electrode sheet typically affect the reliability of the secondary battery. From Example 1-1 and Examples 2-1 to 2-8, it can be seen that the secondary battery where the times of the length of the insul ating tape on the surface of the positive electrode tab relative to the width of the positi ve electrode tab and the times of the width of the insulating tape relative to the width of the positive electrode sheet are within the ranges of this application is used, the ins ulating tape has relatively low thermal shrinkage rates in the length direction and the width direction, and the high-temperature short-circuit pass rate of the secondary batte ry is relatively high, indicating that the secondary battery has good reliability. The hig h-temperature short-circuit pass rate of the secondary battery of Example 2-4 is the sa me as those of Examples 1-1, 2-1, and 2-2, but the insulating tape is relatively long, w hich affects the production cost of the secondary battery and leads to capacity loss due to the increased volume of the secondary battery, thereby affecting the capacity of the secondary battery. The high-temperature short-circuit pass rate of the secondary batte ry of Example 2-8 is the same as those of Examples 1-1, 2-5, and 2-6, but the insulatin g tape is relatively wide, which affects the production cost of the secondary battery an d leads to capacity loss due to the increased volume of the secondary battery, thereby affecting the capacity of the secondary battery.

The melting point of the sealing adhesive typically affects the reliability of the secondary battery. From Example 1-1 and Examples 2-9 to 2-12, it can be seen tha t the secondary battery with the sealing adhesive having the melting point within the r ange of this application is used, the insulating tape has relatively low thermal shrinkag e rates in the length direction and the width direction, and the high-temperature short-circuit pass rate of the secondary battery is relatively high, indicating that the seconda ry battery has good reliability. As compared with Examples 1-1, 2-10, and 2-11, the se condary battery with a sealing adhesive having a melting point of 120°C is used in Ex ample 2-11, and the melting point of the sealing adhesive is relatively low, resulting in relatively poor sealing performance and a relatively high probability of electrolyte lea kage in the secondary battery. Therefore, the high-temperature short-circuit pass rate i s lower than those of Examples 1-1, 2-10, and 2-11. As compared with Examples 1-1, 2-10, and 2-11, the secondary battery with a sealing adhesive having a melting point o f 160°C is used in Example 2-12, and the melting point of the sealing adhesive is relat ively high. The gas generated inside the secondary battery escapes the packaging bag at a relatively slow speed when the internal temperature rises, leading to relatively slo w heat dissipation of the secondary battery and an increased probability of thermal run away. Therefore, the high-temperature short-circuit pass rate is lower than those of Ex amples 1-1, 2-10, and 2-11.

It should be noted that relational terms such as first and second herein are only used to distinguish one entity or operation from another entity or operation regio n and do not necessarily require or imply any such actual relationship or order betwee n these entities or operations. In addition, the terms "include", "contain", or any other variations thereof are intended to cover a non-exclusive inclusion, so that a process, a method, an item, or a device including a series of elements not only includes those ele ments but also includes other elements that are not expressly listed, or further includes elements inherent to such process, method, item, or device.

Various embodiments in this specification are described in related manners , provided that same or similar parts of various embodiments are referred to each other . Each embodiment focuses on the difference from another embodiment.

The foregoing descriptions are merely preferred embodiments of this appli cation, and are not intended to limit this application. Any modifications, equivalent re placements, improvements, and the like made without departing from the spirit and pr inciple of this application shall fall within the protection scope of this application.

**Claims**

1.  A secondary battery, comprising an electrode assembly and an electrolyte, w herein the electrode assembly comprises a positive electrode sheet a negative electrod e sheet and a separator disposed between the positive electrode sheet and the negative electrode sheet

    the positive electrode sheet comprises a positive electrode current collector a p ositive electrode active material layer and a positive electrode tab wherein the positive electrode active material layer is disposed on at least one surface of the positive electr ode current collector the positive electrode active material layer is provided with a firs t groove exposing the positive electrode current collector the positive electrode tab is disposed in the first groove and connected to the positive electrode current collector a n insulating tape is provided on each of a surface of the positive electrode tab and a re gion, corresponding to the first groove of a surface of the positive electrode sheet awa y from the positive electrode tab
    a melting point of the insulating tape is 250°C to 450°C;
    the electrolyte comprises carbonate and carboxylate; and
    based on a mass of the electrolyte, a mass percentage of the carbonate is denot ed as A and a mass percentage of the carboxylate is denoted as B, wherein A and B sat isfy: $75\% \leq A + B \leq 88\%$ and $1 < A / B$.

2.  The secondary battery according to claim 1, wherein the melting point of th e insulating tape is 250°C to 400°C.

3.  The secondary battery according to claim 1, wherein the negative electrode sheet comprises a negative electrode current collector a negative electrode active mate rial layer and a negative electrode tab the negative electrode active material layer is di sposed on at least one surface of the negative electrode current collector the negative e lectrode active material layer is provided with a second groove exposing the negative electrode current collector the negative electrode tab is disposed in the second groove and connected to the negative electrode current collector a tab protection tape is provi ded on a region, corresponding to the second groove of a surface of the negative electr ode sheet away from the negative electrode tab and
    the insulating tape is provided on each of a region of the surface of the positive electrode sheet opposite the second groove and a region of the surface of the positive electrode sheet opposite the tab protection tape

4.  The secondary battery according to any one of claims 1 to 3, wherein the ins ulating tape comprises a substrate and an adhesive layer disposed on one surface of th e substrate, wherein
    the substrate comprises at least one of polyethylene terephthalate, polyethylen e, polytetrafluoroethylene, polyvinyl chloride, polyimide, or polypropylene.

5.  The secondary battery according to any one of claims 1 to 3, wherein along a length direction of the positive electrode sheet a length of the insulating tape provide d on the surface of the positive electrode tab is 3 to 4 times a width of the positive elec trode tab and
    along a width direction of the positive electrode sheet a width of the insulating tape provided on the surface of the positive electrode tab is 0.25 to 0.4 times a width of the positive electrode sheet

6.  The secondary battery according to any one of claims 1 to 3, wherein along a length direction and width direction of the insulating tape thermal shrinkage rates of the insulating tape at a temperature of 300°C are both less than or equal to 1%.

7.  The secondary battery according to any one of claims 1 to 3, wherein the car bonate comprises at least one of ethylene carbonate, propylene carbonate, butylene car bonate, dimethyl carbonate, ethyl methyl carbonate, diethyl carbonate, dipropyl carbo nate, methyl propyl carbonate, ethyl propyl carbonate, dioctyl carbonate, dipentyl carb onate, ethyl isobutyl carbonate, isopropyl methyl carbonate, di-n-butyl carbonate, diis opropyl carbonate, or propyl carbonate; and the carboxylate comprises at least one of ethyl acetate, propyl propionate, buty l acetate, ethyl propionate, propyl acetate, or butyl propionate.

8. The secondary battery according to claim 7, wherein the carbonate comprise s at least one of ethylene carbonate, propylene carbonate, or diethyl carbonate; the car boxylate comprises at least one of propyl acetate or propyl propionate; and

$$2\% \leq A - B \leq 5\%.$$

9. The secondary battery according to any one of claims 1 to 3, wherein the se condary battery comprises a packaging bag; the electrode assembly and the electrolyte are accommodated in the packaging bag; the positive electrode tab and the negativ e lectrode tab extend from the packaging bag; the positive electrode tab and the negativ e electrode tab are each provided with a sealing adhesive the sealing adhesive being se alingly connected to the packaging bag; and

a melting point of the sealing adhesive is 130°C to 150°C.

10. The secondary battery according to claim 9, wherein the sealing adhesive c omprises at least one of polypropylene, polyethylene, polyethylene terephthalate, or p olyethylene naphthalate.

11. An electronic apparatus, wherein the electronic apparatus comprises the se condary battery according to any one of claims 1 to 10.

FIG. 1

FIG. 2

FIG. 3

FIG. 4

## INTERNATIONAL SEARCH REPORT

| International application No. |
| --- |
| **PCT/CN2024/109246** |

**A.    CLASSIFICATION OF SUBJECT MATTER**

H01M10/0525(2010.01)i;  H01M4/70(2006.01)i;  H01M50/531(2021.01)i;  H01M50/186(2021.01)i

According to International Patent Classification (IPC) or to both national classification and IPC

**B.    FIELDS SEARCHED**

Minimum documentation searched (classification system followed by classification symbols)

IPC:  H01M10、H01M4、H01M50

Documentation searched other than minimum documentation to the extent that such documents are included in the fields searched

Electronic data base consulted during the international search (name of data base and, where practicable, search terms used)

CNTXT, ENTXTC, DWPI, CNKI, ISI_Web of Science, CAPLUS (STN): 电池, 电极组件, 集流体, 极耳, 凹 w槽, 凹槽, 孔, 胶纸, 负极极片, 高温短路通过率, 隔膜, 绝缘纸, 熔点, 正极极片, battery, electrode, assembly, current collector, tab, groove, tape, hole, lug, melting point, insulating gummed paper

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117039118 A (NINGDE AMPEREX TECHNOLOGY LTD.) 10 November 2023 (2023-11-10)<br>claims 1-11 | 1-11 |
| A | CN 113381058 A (ZHUHAI COSMX BATTERY CO., LTD.) 10 September 2021 (2021-09-10)<br>claims 1-7, and figures 1-2 | 1-11 |
| A | CN 116581284 A (XIAMEN POWERAMP TECHNOLOGY CO., LTD.) 11 August 2023 (2023-08-11)<br>description, paragraphs 21-22 | 1-11 |
| A | CN 115706296 A (CONTEMPORARY AMPEREX TECHNOLOGY CO., LTD.) 17 February 2023 (2023-02-17)<br>entire document | 1-11 |
| A | WO 2023010924 A1 (CONTEMPORARY AMPEREX TECHNOLOGY CO., LTD.) 09 February 2023 (2023-02-09)<br>entire document | 1-11 |

| ✓ Further documents are listed in the continuation of Box C. | ✓ See patent family annex. |
| --- | --- |

\*    Special categories of cited documents:
"A"    document defining the general state of the art which is not considered to be of particular relevance
"D"    document cited by the applicant in the international application
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
| --- | --- |
| **18 September 2024** | **09 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/109246** |

### C. DOCUMENTS CONSIDERED TO BE RELEVANT

| Category* | Citation of document, with indication, where appropriate, of the relevant passages | Relevant to claim No. |
|---|---|---|
| A | WO 2023039820 A1 (NINGDE AMPEREX TECHNOLOGY LTD.) 23 March 2023 (2023-03-23) entire document | 1-11 |

Form PCT/ISA/210 (second sheet) (July 2022)

**INTERNATIONAL SEARCH REPORT**
Information on patent family members

International application No.

**PCT/CN2024/109246**

| Patent document cited in search report | | | Publication date (day/month/year) | Patent family member(s) | | | Publication date (day/month/year) |
|---|---|---|---|---|---|---|---|
| CN | 117039118 | A | 10 November 2023 | None | | | |
| CN | 113381058 | A | 10 September 2021 | WO | 2022257746 | A1 | 15 December 2022 |
| | | | | US | 2023369733 | A1 | 16 November 2023 |
| | | | | CN | 113381058 | B | 31 October 2023 |
| CN | 116581284 | A | 11 August 2023 | None | | | |
| CN | 115706296 | A | 17 February 2023 | WO | 2023010924 | A1 | 09 February 2023 |
| WO | 2023010924 | A1 | 09 February 2023 | CN | 115706296 | A | 17 February 2023 |
| WO | 2023039820 | A1 | 23 March 2023 | CN | 115461421 | A | 09 December 2022 |
| | | | | CN | 115461421 | B | 16 April 2024 |

Form PCT/ISA/210 (patent family annex) (July 2022)

**EP 4 773 279 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311150807